# EUROPEAN PATENT APPLICATION

(11) **EP 3 351 106 A1**
(43) Date of publication of application: **25.07.2018**
(21) Application number: 17152236.0
(22) Date of filing: 19.01.2017
(51) Int. Cl.: A01N 63/04, A01P 3/00, A01N 25/00

(54) **POST-HARVEST TREATMENT METHOD USING CLONOSTACHYS ROSEA**

(71) Applicant: Danstar Ferment AG, 6300 Zug (CH)
(72) Inventor: SANCHEZ, Jean-Marc, 31700 Daux (FR); COR, Olivier, 44640 Saint Jean de Boiseau (FR); DELAUNOIS, Bertrand, Toulouse 31200 (FR)
(74) Representative: Cabinet Armengaud Aîné

(57) **Abstract**

The present disclosure relates to a new post-harvest treatment method which can be applied to harvested agricultural produce to reduce post-harvest decay.

## Description

The present invention relates to a post-harvest treatment method to protect harvested produce against plant pathogens, to prevent or reduce post-harvest microbial spoilage of harvested produce and/or to control or suppress biological infestation in harvested produce.

Plant pathogens constitute major constraints on crop yield. In addition to losses on growing in-field crops, some plant pathogens also carry over onto harvested commodities which can result in significant spoilage and decay of the produce during storage. Indeed, the majority of post-harvest pathogens infect the crop through wounds that occur during harvest or subsequent handling. Post-harvest losses during storage of crop produce are caused, for example, by water loss, leaf senescence, regrowth and rotting, the latter being caused by fungal and bacterial pathogens. It is estimated that about 25% of the world crop production is lost each year due to post-harvest diseases (as, for example, microbial spoilage), of which spoilage by fungi is by far the most important cause.

It is known that several synthetic chemical compounds can be used to prevent post-harvest damages of harvested produce. However, as known, the use of pesticides causes hazardous effects on humans and the environment. A strong regulation has been imposed, amongst other, on their post-harvest use. Since the use of chemical products has been reduced due to their harmful effect on human health and the environment, the production of fruits free from synthetic chemical residues is a driving cause to find alternative post-harvest treatments to decrease those post-harvest losses.

Biological control of post-harvest fungal pathogens by microbial antagonists such as *Bacillus subtilis, Pseudomonas cepacia, Pseudomonas syringae, Pseudomonas fluorescens, Enterobacter aerogenes, Enterobacter cloacae* and *Debaryomyces hansenii* has been described for a variety of stored vegetables and fruits including apple, apricot, cherry, citrus, grape, nectarine, peach, pear, pepper, plum, potato, strawberries and tomato (Wilson & Wisniewski, 1989). Therefore, the use of antagonistic microorganisms has been suggested as an effective, non-hazardous strategy to control, amongst other, major post-harvest decays of harvested produce.

There is thus a need to develop new and alternative biological post-harvest methods that will prevent, retard, inhibit or control the growth of plant pathogens on harvested produce to lengthen the post-harvest shelf-life of the stored harvested produce.

The present disclosure relates to the use of the fungus *Clonostachys rosea* to extend or increase the post-harvest shelf-life of stored harvested produce. The present disclosure relates to a post-harvest treatment method which can be applied to harvested agricultural produce to reduce post-harvest decay.

In a first aspect, the present disclosure concerns a post-harvest treatment method to protect harvested produce against plant pathogens, to prevent or reduce post-harvest microbial spoilage of harvested produce caused by plant pathogens and/or to control plant pathogens in harvested produce comprising applying to the harvested produce an effective amount of a culture of *C. rosea.*

According to a second aspect, the present disclosure provides the use of *C. rosea* to extend the post-harvest shelf-life of stored harvested produce.

Having thus generally described the nature of the invention, reference will now be made to the accompanying drawings, showing by way of illustration, a preferred embodiment thereof, and in which:
Figure 1 illustrates the percentage of decayed peaches cultivar 'Sandine' during post-harvest storage and compares peaches treated with *C*. *rosea f. catenulata* with controls.
Figure 2 illustrates the percentage of decayed peaches cultivar 'Western Red' during post-harvest storage and compares peaches treated with *C. rosea f. catenulata* with controls.

The present disclosure provides a post-harvest treatment method to protect harvested produce against plant pathogens comprising applying to the harvested produce an effective amount of a culture of *Clonostachys rosea. C. rosea* is a wide-spread, soil-borne fungal saprophyte. This fungus is known as a biological control agent against various soil-borne and foliar plant pathogens. It has been discovered that the fungus *C. rosea* has the property of preventing, retarding or inhibiting growth of plant pathogens on harvested produce and may consequently be used for post-harvest treatment of harvested plant. It has been demonstrated that *C. rosea* can be applied to agricultural produce to reduce post-harvest decay via a competitive inhibition with phytopathogens. The present disclosure relates also to a use of the fungus *C. rosea* to extend or increase the post-harvest shelf-life of stored harvested produce.

An "effective amount", as used herein, is an amount sufficient to effect beneficial or desired results.

In the context of the present disclosure, the fungus is *C. rosea.* Many isolates of C. *rosea* are highly efficient antagonists against several plant pathogenic fungi. The biological control agent *C. rosea* is an antagonistic fungal plant pathogen that is widely present in soil and can produce a series of antibacterial metabolites. In an embodiment, *C. rosea* is *C. rosea f. catenulata.* In a further embodiment, the fungus is *C. rosea f. catenulata* J1446. This strain has been deposited on 19 May 1994 according to the Budapest Treaty to the DSM depositary by the accession number DSM 9212.

The fungus *C. rosea* of the present disclosure is formulated as a liquid suspension or in a dry powder according to any suitable methods known in the art. The biologically pure culture or suspension (comprising, but not limited to, conidia, mycelium fragments and spores) is applied to harvested produce at a concentration of between about 10³ to 10¹² cfu ("colony forming unit")/ml, about 10⁴ to 10¹¹ cfu/ml, about 10⁵ to 10¹⁰ cfu/ml or about 10⁶ to 10⁹ cfu/ml. *C. rosea* is applied to seeds in a liquid suspension at a concentration of about 1x10⁴, about 1x10⁵, about 1x10⁶, about 1x10⁷, about 1x10⁸, about 1x10⁹, about 1x10¹⁰, about 1x10¹¹, about 1x10¹², about 1x10¹³ cfu/ml or greater than 1x10¹³ cfu/ml. *C. rosea* can also be applied to harvested produce in a dry formulation (comprising, but not limited to, conidia, mycelium fragments and spores) at a concentration of between about 10³ to 10¹² cfu/g, about 10⁴ to 10¹¹ cfu/g, about 10⁵ to 10¹⁰ cfu/g or between 10⁶ to 10⁹ cfu/g. *C. rosea* can also be applied to seeds in a dry formulation at a concentration of about 1x10⁴, about 1x10⁵, about 1x10⁶, about 1x10⁷, about 1x10⁸, about 1x10⁹, about 1x10¹⁰, about 1x10¹¹, about 1x10¹², about 1x10¹³ cfu/ml or greater than 1x10¹³ cfu/g. The optimal amount can vary depending upon crop species and plant pathogens and can be readily determined by those skilled in the art.

The fungal culture, suspension or formulation according to the present disclosure can be applied to harvested produce by contacting the harvested produce by any means known to the artisan skilled in the art. The term "contacting" as used herein means causing the harvested produce to come into proximity with an exogenous liquid or solid (such as a powder) form of a composition according to the disclosure. Examples of such methods include, but are not limited to dipping, immersing, spraying, coating, dusting and soaking application methods. The application forms and methods depend entirely on the intended purposes in order to ensure the finest and uniform distribution of the biological control agent onto the harvested produce. Aqueous application forms can be prepared from emulsion concentrates, pastes or wettable powders by adding water. It is also possible to prepare concentrates composed of the biological control agent, wetter, tackifier, dispersant or emulsifier and, if appropriate, solvent or oil, and such concentrates are suitable for dilution with water.

The fungal culture or suspension can be applied, after harvesting, onto the surface of the harvested produce in combination with any known agriculturally-acceptable adjuvant, carrier or binder formulation.

In addition, the harvested produce can be treated with other antifungal and/or antimicrobial compositions, commonly known to the person skilled in the art, either prior or after treatment of the harvested produce with the post-harvest treatment of the present disclosure.

The post-harvest treatment according to the present disclosure is important in the control of fungi on various harvested produce, such as fruits (such as, but not limited to, stone fruits or soft fruits), vegetables, flowers or nuts. Indeed, as used herein, the term "harvested produce" refers to all harvested product, crop, such as fruits, vegetables, nuts, cut flowers, etc. derived from a plant. According to a further embodiment, the post-harvest treatment of the present disclosure is particularly important in the control of plant pathogens on various harvested produce such as, but not limited, apple, apricot, banana, blueberry, cantaloupe, carrot, clementine, cherry, cranberry, cucumber, endive, garlic, grapefruit, kaki, kiwi, grape, lemon, lime, lettuce, mandarin, mango, melon, mushroom, nashi, nectarine, onion, orange, papaya, peach, pear, pepper, pineapple, plum, prune, pumpkin, raspberry, strawberry, tangerine, tomato or watermelon. In one particular embodiment, the harvested produce is a stone fruit. In a further embodiment, the stone fruit is a peach, nectarine, plum, apricot or cherry.

The post-harvest treatment method of the present disclosure is suitable for controlling plant pathogens. The post-harvest treatment method of the present disclosure is suitable for controlling fungal plant pathogens. In a further embodiment, the post-harvest treatment method of the present disclosure is suitable for controlling the following fungi in harvested produce: *Colletotrichum* spp., *Fusarium* spp., *Alternaria* spp., *Botrytis* spp., *Monilinia* spp., *Lasiodiplodia* spp., *Phomopsis* spp., *Botryosphaeria* spp., *Verticillium* spp., *Geotrichum* spp., *Phytophthora* spp., *Septoria* spp., *Mucor* spp., *Venturia* spp., *Rhizopus* spp., *Glomerella* spp., *Sclerotinia* spp., *Ceratocystis* spp., *Penicillium* spp., *Gloeosporium* spp., *Phlyctaena* spp., *Cylindrocarpon* spp., *Stemphyllium* spp., *Phacydiopycnis* spp., *Thielaviopsis* spp., *Aspergillus* spp. or *Nectria* spp.. In one particular embodiment, the post-harvest treatment method of the present disclosure is suitable for controlling *Penicllium* spp., *Alternaria* spp., *Rhyzopus* spp., *Botrytis* spp. or *Monilia* spp.

The following examples serve to further describe and define the invention, and are not intended to limit the invention in any way.

### EXAMPLE

### Efficacy of C. rosea f. catenulata against post-harvest diseases on peaches

The objective this study was to evaluate the effect of C. *rosea f. catenulata* for the management of post-harvest diseases on peaches, for preventing post-harvest decay and for reducing post-harvest losses of harvested peaches.

### Fruits:

Peaches ('Sandine' and 'Western Red') were picked at firm ripe stage from a commercial orchard (using Integrated Fruit Production (IFP)) and store at 4°C for 2 days or less.

### Antagonist/biocontrol agent:

PDA (potato dextrose agar) in Petri dishes was inoculated with spores of C. *rosea f. catenulata* J1446 by placing a droplet of spore suspension containing about 10⁶ to 10⁷ cfu/ml onto the medium in each dish and spreading the droplet over the agar surface with a cell spreader. The dispersed spores initiated numerous colonies which sporulated heavily at 25° C and the spores were normally collected after 8 days.

### Fruit inoculation:

The peaches were disposed on alveole trays (22 peaches per tray). There were 4 replicates of 44 peaches per treatment and per variety, with one replicate of each treatment per tray. Non-treated fruits (i.e. produced fruits via Integrated Fruit Production) and fruits treated with water were used as negative controls.

For the post-harvest treatments, the fruits were sprayed to runoff (15 ml per tray) on both sides with a *C. rosea f. catenulata* J1446 suspension at a concentration of about 10⁷ cfu/ml. The peaches were air-dried and incubated at 22°C. Percent fruit infection was measured every 48 hours for 30 days.

### Statistical analysis:

Data were statistically analyzed using StatBox Pro. Analysis of variance was performed on arcsin square-root transformed data by the general linear models procedure. Mean separations were performed using the Student Newmann and Keuls test.

### Results and conclusion:

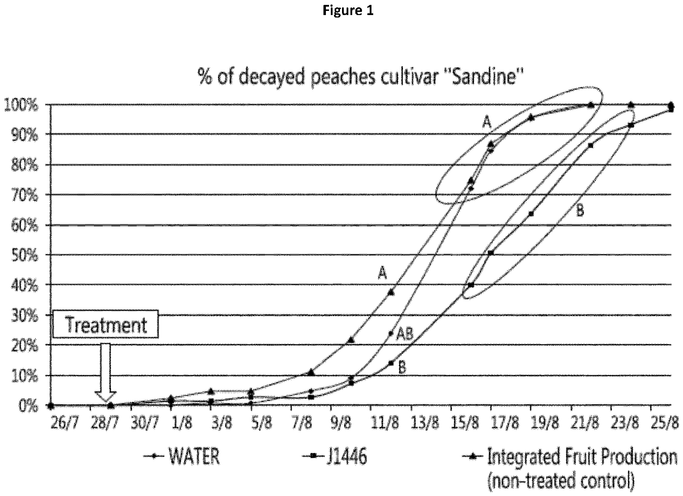

The results, as shown in Figure 1, clearly demonstrate that the percentage of decayed harvested peaches 'Sandine' was significantly reduced when the harvested peaches was inoculated with *C. rosea f. catenulata* J1446 as compared to the controls.

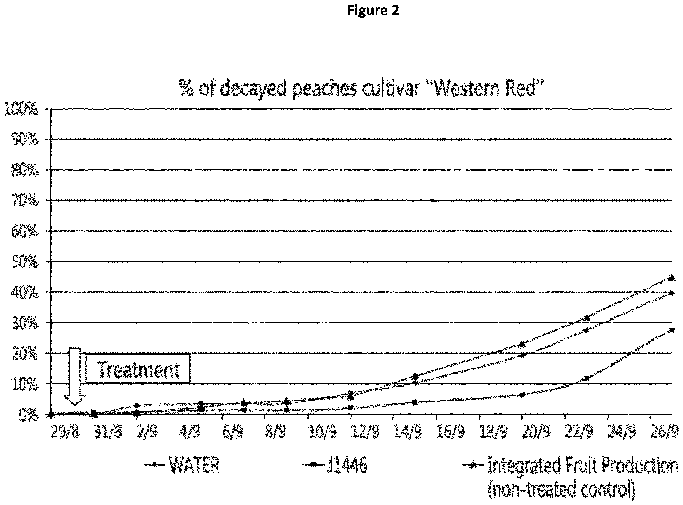

Results shown in Figure 2 represent the decay incidence on harvested peaches 'Western Red' and indicate that this peach cultivar is less susceptible to post-harvest decay than the 'Sandine' cultivar. Although the post-harvest treatment with *C. rosea f. catenulata* J1446 retard decay symptoms, the fungus treatment does not significantly reduced decay when compared with the controls.

After analysis, it was demonstrated that post-harvest decay on the peaches was caused by the following fungi: *Penicllium* spp., *Alternaria* spp., *Rhyzopus* spp., *Botrytis* spp. and *Monilia* spp.

In summary, as measured by their physical and sensory attributes, the use of *C. rosea f. catenulata* J1446 as a post-harvest treatment method preserved the quality of the peaches 'Sandine' and 'Westernred' during storage. These results demonstrate, amongst other, that *C. rosea f. catenulata* is a useful alternative for controlling pathogenic fungi, protecting harvested produce against storage diseases caused by plant pathogens, maintaining the post-harvest quality of peaches and extending the post-harvest shelf-life of the stored harvested produce.

While the invention has been described in connection with specific embodiments thereof, it will be understood that it is capable of further modifications and this application is intended to cover any variations, uses, or adaptations of the invention following, in general, the principles of the invention and including such departures from the present disclosure that come within known or customary practice within the art to which the invention pertains and as may be applied to the essential features hereinbefore set forth, and as follows in the scope of the appended claims.

### REFERENCE

Wilson, C.L., Wisniewski, M., 1989. Biological control of postharvest diseases of fruits and vegetables: an emerging technology. Annu. Rev. Phytopathol. 27, 425-441.

## Claims

1. A post-harvest treatment method to protect harvested produce against plant pathogens, to prevent or reduce post-harvest microbial spoilage of harvested produce caused by plant pathogens and/or to control plant pathogens in harvested produce comprising applying to the harvested produce an effective amount of a culture of *Clonostachys rosea.*

2. The post-harvest treatment method of claim 1, wherein *C. rosea* is *C. rosea f. catenulata.*

3. The post-harvest treatment method of claim 2, wherein *C. rosea f. catenulata* is *C. rosea f. catenulata* J1446.

4. The post-harvest treatment method of any one of claims 1 to 3, wherein the harvested produce is a fruit or a vegetable.

5. The post-harvest treatment method of claim 4, wherein the fruit is a stone fruit.

6. The post-harvest treatment method of claim 5, wherein the stone fruit is a peach, a nectarine, a plum, an apricot or a cherry.

7. The post-harvest treatment method of any one of claims 1 to 6, wherein the plant pathogens are fungal plant pathogens.

8. The post-harvest treatment method of any one of claims 1 to 7, wherein the plant pathogens are *Penicillium* spp., *Alternaria* spp., *Rhyzopus* spp., *Botrytis* spp. or *Monilia* spp..

9. The post-harvest treatment method of any one of claims 1 to 8, wherein said culture of *C. rosea* is combined with an agriculturally acceptable carrier.

10. The post-harvest treatment method of any one of claims 1 to 9, wherein said culture of *C. rosea* is at a concentration of between about 10³ to 10¹² cfu/ml, about 10⁴ to 10¹¹ cfu/ml, about 10⁵ to 10¹⁰ cfu/ml or about 10⁶ to 10⁹ cfu/ml.

11. The post-harvest treatment method of any one of claims 1 to 9, wherein said culture of *C. rosea* is in a dry formulation at a concentration of between about 10³ to 10¹² cfu/ml, about 10⁴ to 10¹¹ cfu/ml, about 10⁵ to 10¹⁰ cfu/ml or about 10⁶ to 10⁹ cfu/g.

12. Use of *C. rosea* to extend the post-harvest shelf-life of stored harvested produce.

13. The use of claim 12, wherein *C. rosea* is *C. rosea f. catenulata.*

14. The use of claim 13, wherein *C. rosea f. catenulata* is *C. rosea f. catenulata* J 1446.
